# FASCICULE DE BREVET EUROPEEN

(11) **EP 2 941 624 B1**
(45) Date de publication et mention de la délivrance du brevet: **03.10.2018**
(21) Numéro de dépôt: 14700154.9
(22) Date de dépôt: 07.01.2014
(51) Int. Cl.: G01D 4/00

(54) **KIT DE RÉTROFIT D'UN COMPTEUR AVEC UN DISPOSITIF DE TÉLÉRELÈVE**
NACHRÜSTSATZ FÜR VERBRAUCHSZÄHLER MIT EINER VORRICHTUNG ZUR FERNABLESUNG
RETROFITTING KIT FOR UTILITY METER WITH A REMOTE READING DEVICE

(30) Priorité: 07.01.2013 FR 1350110
(43) Date de publication de la demande: 11.11.2015
(73) Titulaire: Sagemcom Energy & Telecom SAS, 92500 Rueil-Malmaison (FR)
(72) Inventeur: SABATIER, Pierre, F-92500 RUEIL-MALMAISON (FR); KUHN, Alex, F-92500 RUEIL-MALMAISON (FR)
(74) Mandataire: Lavialle, Bruno François Stéphane
(86) Numéro de dépôt international: PCT/EP2014/050156
(87) Numéro de publication internationale: WO 2014/106662

(56) Documents cités:
- WO-A1-2005/064563
- WO-A1-2012/025126
- US-A1- 2003 034 900

## Description

### DOMAINE TECHNIQUE GÉNÉRAL ET ART ANTÉRIEUR

La présente invention est relative à un dispositif de télérelève compteur de mesure. Elle trouve avantageusement application, pour le relevé à distance de mesure de compteur de fluide, et notamment de gaz, d'autres applications que les compteurs de gaz étant néanmoins possibles (compteurs d'eau, compteurs de chaleur, etc...).

Les compteurs de débit, et notamment ceux chez l'abonné, se présentent classiquement sous la forme d'un boîtier qui comporte une fenêtre transparente permettant la lecture d'un totalisateur numérique à roues graduées.

Il a déjà été proposé d'équiper de tels compteurs de systèmes de télérelève permettant de transmettre à distance la consommation relevée par le compteur.

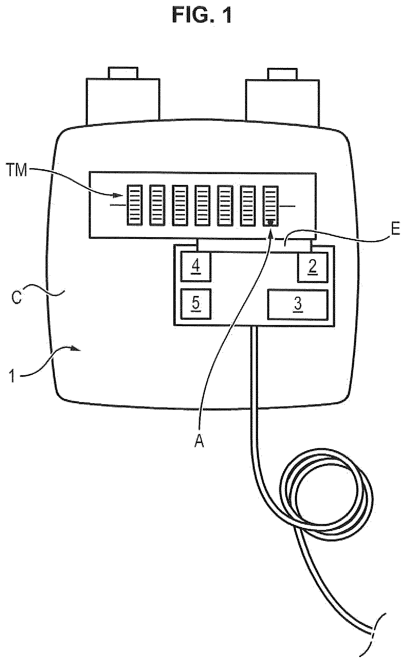

Le document WO 2012/025126 A1 décrit un dispositif de rétrofit qui permet de rapporter une fonction de télérelève sur un compteur d'électricité au moyen d'un capteur de suivi de la rotation du disque Ferraris. Le capteur est fixé au boîtier du compteur à l'aide d'un ruban adhésif. Une solution connue consiste, ainsi qu'illustré sur la figure 1, en un boîtier 1 de télérelève que l'on rapporte sur le compteur C.

Ce boîtier 1 intègre un capteur d'impulsions 2 pour détecter la rotation d'un petit aimant A fixé sur la roue « unité » du totalisateur mécanique TM du compteur C. Un tel capteur d'impulsions 2 est par exemple une ampoule Reed. Il détecte le passage de l'aimant A à son niveau à chaque nouveau tour de la roue portant l'aimant (généralement, la roue unité). Une électronique 3 dans le boîtier 1 permet de comptabiliser les impulsions. Les informations de relevé sont transmises à un serveur à distance via un transmetteur radio (non représenté) auquel ledit boîtier 1 est relié.

Le boîtier 1 comporte généralement d'autres capteurs, et notamment des capteurs 4 permettant de détecter une éventuelle fraude magnétique pour le cas où un fraudeur chercherait à saturer le capteur d'impulsions approchant un aimant de puissance.

Un micro-interrupteur 5 est en outre souvent prévu au niveau de la face de contact par laquelle le boîtier 1 est rapporté sur le compteur C, afin de détecter un éventuel arrachement du boîtier 1 par rapport audit compteur C.

Un tel boîtier 1 assure ainsi la fixation et le maintien de l'ensemble de l'électronique par rapport au compteur C, en même que la mise en position relative du capteur d'impulsions 2 qui détecte les rotations de l'aimant tournant. On notera que le positionnement de ce boîtier 1 par rapport au compteur C doit de ce fait être très précis, afin de permettre au capteur d'impulsions 2 d'être sensible au passage de l'aimant, compte tenu de l'intensité de son champ magnétique et de l'orientation de celui-ci.

Des interfaces de positionnement (encoches de fixation E) sont généralement prévues au niveau des compteurs.

Toutefois, ces interfaces ne sont pas normalisées, de sorte qu'elles peuvent fortement varier dans leur forme et leur positionnement d'un fabricant à un autre. Les boîtiers d'interface sont par conséquent différents pour chaque modèle de compteur et chaque fabricant.

Un but général de l'invention est de proposer un dispositif de télérelève qui soit universel et qui puisse être utilisé pour différents types de compteurs.

### PRÉSENTATION GÉNÉRALE DE L'INVENTION

L'invention propose quant à elle un kit de rétrofit d'un compteur, tel que défini dans la revendication 1. Ce kit comporte un dispositif de télérelève destiné à être rapporté sur le compteur et comportant un capteur de suivi de la rotation d'une roue d'un totalisateur mécanique du compteur. Ce dispositif de télérelève comporte un boîtier d'électronique séparé en plus de la partie formant capteur.

En ayant ainsi séparé la fonction « capteur » de la fonction « fixation » du boîtier, on allège fortement les contraintes de positionnement par rapport au compteur. L'interface mécanique s'en trouve simplifiée, de sorte que le dispositif de télérelève peut facilement s'adapter sur des compteurs de différents modèles et de différentes configurations.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 représente schématiquement un compteur équipé d'un boîtier de télémesure conforme à un l'état de la technique ;
- la figure 2 illustre la structure générale d'un dispositif de télérelève conforme à un mode de réalisation possible de l'invention ;
- la figure 3 illustre un exemple de réalisation possible pour le capteur du dispositif de télérelève illustré sur la figure 2 ;
- les figures 4a à 4d illustrent schématiquement différents exemples de connectiques mécaniques qui peuvent être utilisées pour la fixation d'un capteur du type de celui de la figure 3 sur un compteur C ;
- la figure 5 illustre un kit comportant un dispositif de télérelève conforme à un mode de réalisation de l'invention et différentes connectiques mécaniques susceptibles d'être utilisées lors de la mise en place d'un tel dispositif de télérelève sur un compteur ;
- les figures 6a à 6d illustrent différents exemples de mise en place de capteurs et de leurs connectiques mécaniques sur différents types de compteurs.

### EXEMPLES DE PLUSIEURS MODES DE RÉALISATION

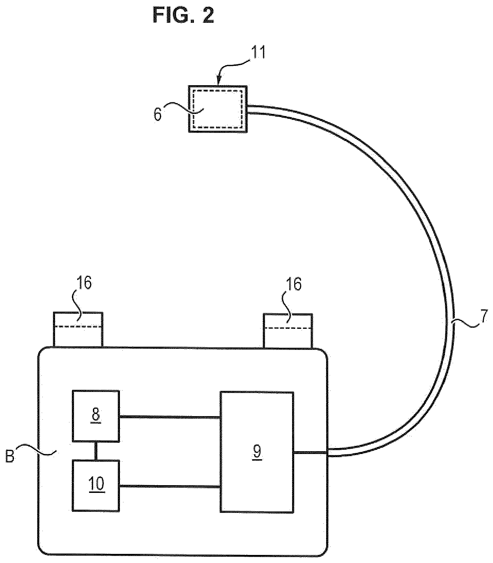

Le dispositif de télérelève illustré sur la figure 2 comporte un boîtier B et un capteur d'impulsions 6 qui sont séparés et qui sont reliés l'un à l'autre par une liaison filaire 7.

Le boîtier B intègre une électronique qui comporte :
- une source d'alimentation 8 qui est prévue pour permettre au dispositif de disposer d'une autonomie sur une longue durée,
- un électronique 9 de traitement, par exemple à microprocesseur, qui reçoit les signaux en provenance du capteur 6 et les traite pour décompter les rotations des roues du totalisateur du compteur sur lequel le dit boîtier B est installé,
- une électronique 10 d'émission-réception par laquelle le boîtier échange avec un serveur de télérelève situé à distance.

Le capteur d'impulsions 6 séparé du boîtier B peut être de tout type et est par exemple un capteur à effet Hall ou un capteur magnéto-résistif. Il est par exemple d'une structure à base de silicium. Il est noyé dans une résine de protection (enveloppe 11) qui est conformée pour permettre sa fixation sur un compteur.

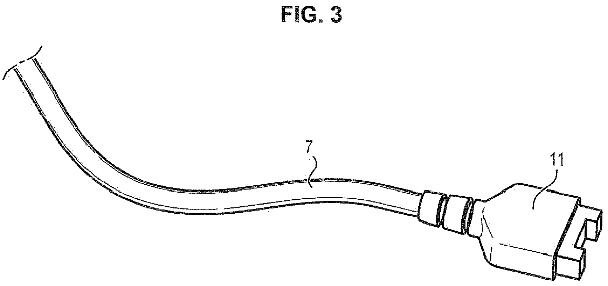

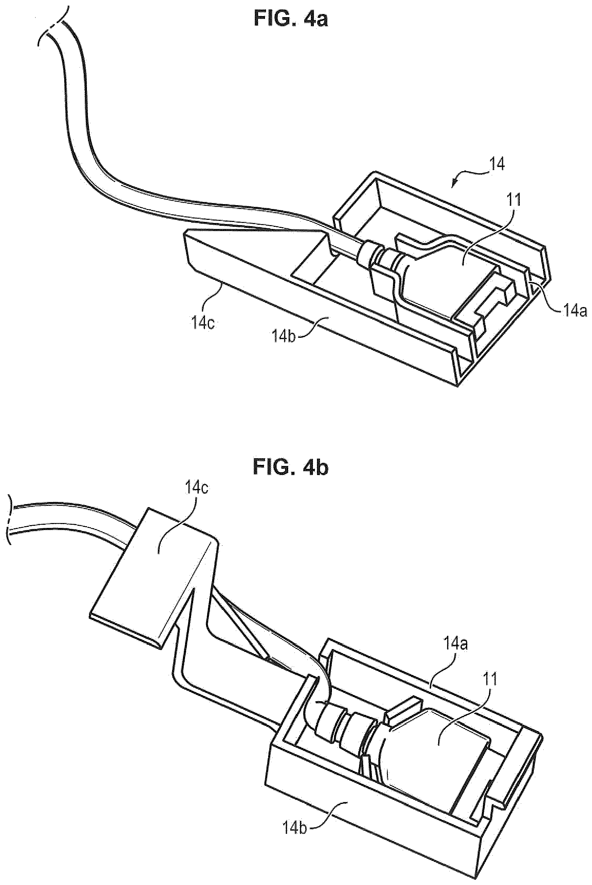

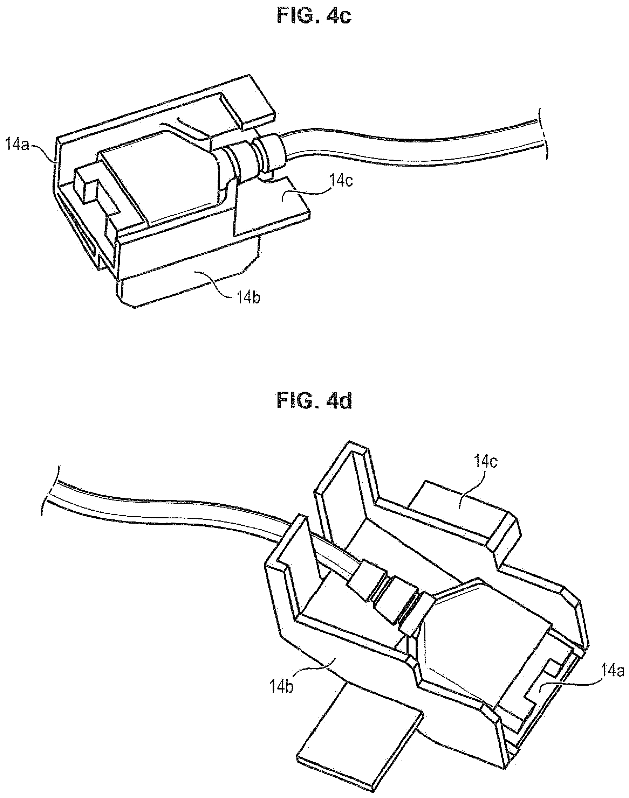

Conformément à la figure 3, l'enveloppe de protection 11 du capteur 6 est conformée pour s'enficher dans des connectiques complémentaires, par exemple du type de celles illustrées sur les figures 4a à 4d.

On notera en outre que la partie capteur intégrée dans l'enveloppe 11 peut comporter d'autres capteurs que le seul capteur d'impulsions, et par exemple un capteur à effet Hall pour la détection d'une tentative de fraude par approche d'un aimant de puissance.

Les connectiques mécaniques illustrées sur ces figures 4a à 4d donnent différents exemples de pièces 14 de connectique qui peuvent être utilisées pour permettre de fixer la partie capteur sur le compteur. Les différentes pièces 14 illustrées sur ces figures comportent une zone de réception 14a de forme complémentaire à celle de l'enveloppe 11 du capteur 6 et dans laquelle ladite partie capteur est destinée à ê s'enficher pour être maintenue.

Elles comportent également une coque générale externe rigide 14b, qui est conformée avec des pattes de fixation ou d'appui 14c en saillie, qui permettent leur mise en place et leur maintien sur les encoches de fixation prévues sur les principaux types de compteurs utilisés.

Les différentes pièces de connectique illustrées sur les figures 4a à 4d permettent de fixer sur différents types de compteurs.

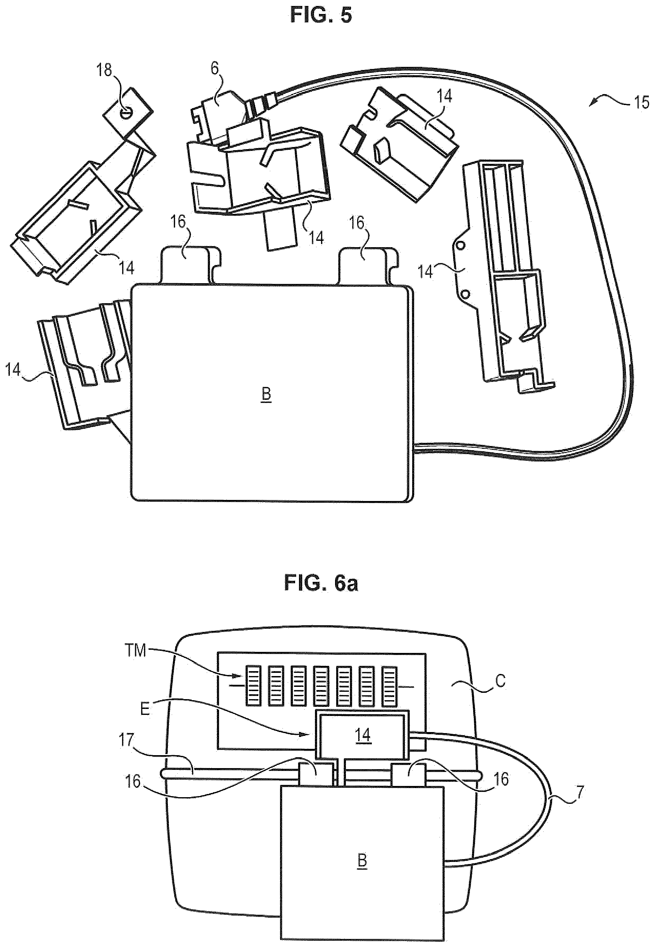

Lorsqu'il se présente pour installer un nouveau dispositif de télérelève, un technicien pourra disposer d'un kit 15 comportant non seulement le dispositif de télérelève comportant le capteur 6 et le boîtier B séparés mais également les différents types de pièces de connectiques mécaniques 14 correspondant à différents cas de figure possibles pour les compteurs (kit illustré sur la figure 5).

De cette façon, il sera en mesure, au moyen de son kit, d'installer le dispositif de télérelève sur le compteur qu'il a à équiper, et ce quel que soit le modèle de ce compteur.

A cet effet, il positionnera le boîtier B sur un compteur C, par exemple au moyen de pattes de fixation 16 prévues sur le boîtier B, pour l'accrochage dudit boîtier sur un rebord 17 en saillie que le compteur C peut présenter au niveau de la zone de jonction des deux demi-coquilles qui le constitue. Il choisira ensuite la connectique mécanique 14 la plus adaptée au compteur C en présence duquel il se trouve, enfichera l'enveloppe 11 de la partie capteur dans la pièce de connectique 14 ainsi choisie et fixera ladite pièce de connectique 14 dans laquelle la partie capteur aura ainsi été enfichée dans l'encoche E d'interface prévue sur le compteur C.

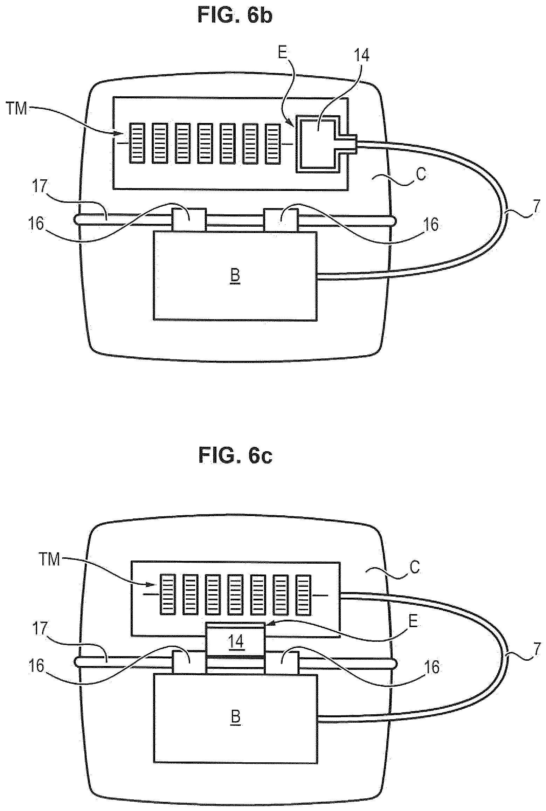

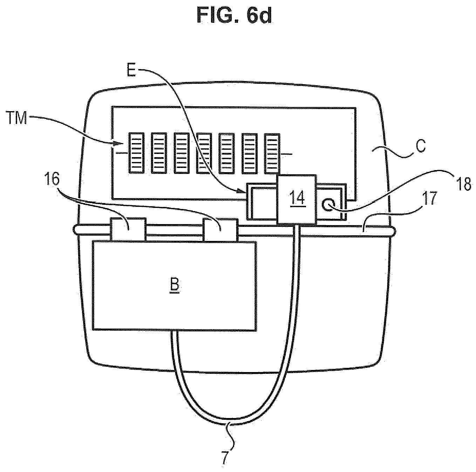

C'est ce qu'illustrent les figures 6a à 6d pour différents types de connectiques mécaniques et différents modèles de compteurs.

Cette solution avec des pièces de connectiques mécaniques à l'avantage de permettre une adaptation à différents types de compteur sans collage et sans connaître préalablement le compteur qui doit être équipé.

On notera en outre que des oeillets 18 (kit sur la figure 5) peuvent être prévus sur tout ou partie des pièces 14 de connectique pour permettre la mise en place de scellés entre ces pièces qui portent les capteurs et le compteur, lorsque cela est possible

Comme on l'aura compris, le dispositif de télérelève s'utilisent avec tout type de compteur mécanique, y compris avec des compteurs qui ne seraient pas pourvus d'aimant.

Le capteur peut en particulier être autre qu'un capteur magnétique et notamment être un capteur optique.

## Revendications

1. Kit de rétrofit (15) d'un compteur, **caractérisé en ce qu'**il comporte :
• un dispositif de télérelève destiné à être rapporté sur un compteur et comportant un capteur de suivi de la rotation d'une roue d'un totalisateur mécanique du compteur, et un boitier d'électronique (B) séparé en plus de la partie formant capteur (6),
• et un jeu de pièces support (14) formant connectiques mécaniques spécifiquement adaptées pour se fixer sur différents modèles respectifs de compteurs et dans lesquelles ladite partie formant capteur (6) est destinée à s'enficher.

2. Kit selon la revendication 1, **caractérisé en ce que** la partie formant capteur (6) comporte, outre le capteur de suivi de rotation, au moins un capteur de détection de fraude.

3. Kit selon la revendication 1, **caractérisé en ce que** la partie formant capteur (6) et le boîtier (B) sont reliés par un câble de liaison (7).

4. Kit selon la revendication 1, **caractérisé en ce que** le boîtier (B) comporte une source d'alimentation (8) et un transmetteur (10).

5. Kit selon la revendication 1, **caractérisé en ce que** le ou les capteurs de la partie formant capteur (6) sont des capteurs de structure à base de silicium.

6. Kit selon la revendication 1, **caractérisé en ce que** le boîtier d'électronique (B) comporte au moins une patte de fixation (16) sur un rebord (17) de compteur.

7. Kit selon la revendication 1, **caractérisé en ce que** les pièces supports (14) comportent des oeillets (18) pour la mise en place de scellés.

8. Procédé d'installation d'un dispositif de télérelève sur un compteur au moyen d'un kit de rétrofit (15) d'un compteur selon l'une quelconque des revendications précédentes comportant des étapes de :
- fixation dudit boitier d'électronique séparé (B) sur le compteur,
- sélection d'une pièce support (14) formant connectique mécanique adaptée au compteur,
- enfichage de la partie formant capteur (6) dans la pièce support (14) sélectionnée,
- fixation de la pièce support (14) dans laquelle est enfichée la partie formant capteur (6) sur le compteur.

9. Procédé d'installation selon la revendication précédente dans lequel, l'étape de fixation du boitier d'électronique séparé (B) sur le compteur comporte l'accrochage dudit boîtier sur un rebord (17) en saillie du compteur au moyen de pattes de fixation (16) prévues sur le boîtier (B).

10. Procédé d'installation selon l'une des revendications 8 ou 9 dans lequel, l'étape de fixation de la pièce support (14) sur le compteur comprend la fixation de la pièce support (14) dans une encoche d'interface (E) prévue sur le compteur.

## Patentansprüche

1. Nachrüst-Kit (15) für einen Zähler, **dadurch gekennzeichnet, dass** es umfasst:
• eine Fernablesevorrichtung, die dazu bestimmt ist, an einem Zähler angebracht zu werden, und einen Sensor zum Verfolgen der Drehung eines Rades eines mechanischen Summenzählwerks des Zählers umfasst, sowie ein separates Elektronikgehäuse (B) zusätzlich zu dem den Sensor bildenden Teil (6),
• und ein Satz Halterungen (14), die mechanische Steckverbinder bilden, die speziell angepasst sind, um an jeweiligen verschiedenen Modellen von Zählern befestigt zu werden, und in die der genannte den Sensor bildende Teil (6) gesteckt werden soll.

2. Kit nach Anspruch 1, **dadurch gekennzeichnet, dass** der den Sensor bildende Teil (6) außer dem Sensor zum Verfolgen der Drehung mindestens einen Sensor zum Erfassen eines Betrugs umfasst.

3. Kit nach Anspruch 1, **dadurch gekennzeichnet, dass** der den Sensor bildende Teil (6) und das Gehäuse (B) über ein Verbindungskabel (7) verbunden sind.

4. Kit nach Anspruch 1, **dadurch gekennzeichnet, dass** das Gehäuse (B) eine Versorgungsquelle (8) und einen Sender (10) umfasst.

5. Kit nach Anspruch 1, **dadurch gekennzeichnet, dass** der oder die Sensoren des den Sensor bildenden Teils (6) Silizium-Struktur-Sensoren sind.

6. Kit nach Anspruch 1, **dadurch gekennzeichnet, dass** das Elektronikgehäuse (B) mindestens eine Befestigungslasche (16) zur Befestigung an einem Rand (17) des Zählers umfasst.

7. Kit nach Anspruch 1, **dadurch gekennzeichnet, dass** die Halterungen (14) Ösen (18) zum Platzieren von Plomben umfassen.

8. Verfahren zur Montage einer Fernablesevorrichtung an einem Zähler mittels eines Nachrüst-Kits (15) für einen Zähler nach einem der vorhergehenden Ansprüche, umfassend die Schritte:
- Befestigen des separaten Elektronikgehäuses (B) an dem Zähler,
- Auswählen einer Halterung (14), die einen mechanischen Steckverbinder bildet, der an den Zähler angepasst ist,
- Stecken des den Sensor bildenden Teils (6) in die ausgewählte Halterung (14),
- Befestigen der Halterung (14), in die der den Sensor bildende Teil (6) gesteckt ist, an dem Zähler.

9. Montageverfahren nach dem vorhergehenden Anspruch, bei dem der Schritt des Befestigens des separaten Elektronikgehäuses (B) an dem Zähler das Aufhängen des Gehäuses an einem vorstehenden Rand (17) des Zählers mittels an dem Gehäuse (B) vorgesehenen Befestigungslaschen (16) umfasst.

10. Montageverfahren nach einem der Ansprüche 8 oder 9, bei dem der Schritt des Befestigens der Halterung (14) an dem Zähler die Befestigung der Halterung (14) in einer an dem Zähler vorgesehenen Schnittstellen-Nut (E) umfasst.

## Claims

1. A kit for retrofit (15) of a meter, **characterized in that** it comprises:
• a remote reading device intended to be hooked up to a meter and comprising a sensor for following the rotation of a wheel of a mechanical totalizer of the meter, and an electronics box (B) separated moreover from the part forming a sensor (6),
• and a set of support components (14) forming mechanical connection facilities specifically suitable for fixing onto various respective models of meters and into which said part forming a sensor (6) is intended to be plugged.

2. The kit according to claim 1, **characterized in that** the part forming a sensor (6) comprises, in addition to the sensor for following the rotation, at least one fraud detection sensor.

3. The kit according to claim 1, **characterized in that** the part forming a sensor (6) and the housing (B) are connected by a connecting cable (7).

4. The kit according to claim 1, **characterized in that** the housing (B) comprises a power source (8) and a transmitter (10).

5. The kit according to claim 1, **characterized in that** the sensor(s) of the part forming a sensor (6) are sensors with a silicon-based structure.

6. The kit according to claim 1, **characterized in that** the electronics housing (B) comprises at least one attachment (16) for fixing to a rim (17) of the meter.

7. The kit according to claim 1, **characterized in that** the support components (14) comprise eyelet holes (18) for fitting seals.

8. A method of installation of a remote reading device on a meter by means of a kit for retrofit (15) of a meter according to any one of the preceding claims, comprising the steps of:
- fixing said separate electronics housing (B) onto the meter,
- selecting a support component (14) forming a mechanical connection facility adapted to the meter,
- plugging the part forming a sensor (6) into the selected support component (14),
- fixing onto the meter the support component (14) into which the part forming a sensor (6) is plugged.

9. The method of installation according to the preceding claim, wherein the step of fixing the separate electronics housing (B) onto the meter comprises the hooking of said housing onto a rim (17) protruding from the meter by means of fixing attachments (16) provided on the housing (B).

10. The method of installation according to one of claims 8 or 9, wherein the step of fixing the support component (14) onto the meter includes the fixing of the support component (14) in an interface groove (E) provided on the meter.
